Europäisches Patentamt

European Patent Office

Office européen des brevets

(11) Veröffentlichungsnummer: **0 266 594**
**A1**

(12) **EUROPÄISCHE PATENTANMELDUNG**

(21) Anmeldenummer: **87115080.1**

(22) Anmeldetag: **15.10.87**

(51) Int. Cl.4: **F16K 5/06 , F16K 47/02**

(30) Priorität: **29.10.86 DE 3636856**

(43) Veröffentlichungstag der Anmeldung:
**11.05.88 Patentblatt 88/19**

(84) Benannte Vertragsstaaten:
**DE ES FR GB IT**

(71) Anmelder: **Max Widenmann Armaturenfabrik
Lederstrasse 30 bis 36 Postfach 1660
D-7928 Giengen/Brenz(DE)**

(72) Erfinder: **Ambrosi, Martin Johann
Wiesenstrasse 54
D-7922 Herbrechtingen(DE)**

(74) Vertreter: **Degwert, Hartmut, Dipl.-Phys. et al
Patent Attorneys Prinz, Leiser, Bunke &
Partner Manzingerweg 7
D-8000 München 60(DE)**

(54) **Kugelhahn.**

(57) Der Kugelhahn ist mit einer Blockiervorrichtung versehen, welche seine Schaltwelle (14) in ihrer jeweiligen Drehstellung zwischen Schließstellung und Öffnungsstellung automatisch blockiert, wenn die Schaltbewegung zu schnell erfolgt. Diese Blockiervorrichtung spricht auf die jeweilige Drehstellung eines drehbar am Kugelhahngehäuse (10) gelagerten ringförmigen Trägheitskörpers (28) an, dessen durch Federbeaufschlagung bewirkte Drehbewegung durch die Drehung der Schaltwelle (14) ausgelöst und durch seine Massenträgheit gehemmt wird. Bei ausreichend langsamer Betätigung der Schaltwelle (14) bleibt die Blockiervorrichtung außer Funktion. Bei zu schneller Betätigung, die zu unzulässig hohen Druckspitzen führen könnte, wird die Schaltwelle (14) durch die Blockiervorrichtung blockiert.

FIG.1

EP 0 266 594 A1

## Kugelhahn

Die Erfindung betrifft einen Kugelhahn mit einem kugelförmigen Absperrkörper, der über eine im Kugelhahngehäuse drehbar gelagerte Schaltwelle zwischen Schließstellung und Öffnungsstellung verstellbar ist.

Kugelhähne weisen einen geringen Raumbedarf bei gegebenem Durchströmquerschnitt auf und finden daher besonders bei mobilem Einsatz verbreitete Anwendung. So sind Kugelhähne als Absperrorgane bei der Feuerwehr weit verbreitet. Der Schaltweg zwischen Öffnungsstellung und Schließstellung beträgt bei Kugelhähnen gewöhnlich nur 90° Drehwinkel. Das Öffnen oder Schließen eines Kugelhahns ist daher auch unter Druck innerhalb eines Bruchteils einer Sekunde möglich. Ein zu schnelles Öffnen oder Schließen führt aber zu Druckspitzen, durch welche die Leitungselemente überlastet werden können. Durch Druckspitzen, die beim plötzlichen Öffnen oder Schließen von Kugelhähnen entstehen, können lose ver legte Leitungen auch zu unkontrollierten und gefährlichen Bewegungen veranlaßt werden. Die Betätigung von Kugelhähnen unter Druck muß daher ausreichend langsam erfolgen, um das Auftreten von unzulässig hohen Druckspitzen zu vermeiden. Die Einhaltung dieser Vorschrift setzt aber eine Bedienung durch geschultes Personal voraus. Dennoch können beispielsweise bei Feuerwehreinsätzen Bedienungsfehler gemacht werden, die zu einer Beschädigung des Materials oder einer Gefährdung des Personals führen.

Der Erfindung liegt die Aufgabe zugrunde, einen Kugelhahn zu schaffen, bei dem mit einfachen Mitteln ein zu schnelles Öffnen oder Schließen zuverlässig verhindert wird.

Diese Aufgabe wird bei dem Kugelhahn der eingangs angegebenen Art erfindungsgemäß dadurch gelöst, daß die Schaltwelle an eine Blockiervorrichtung zur Blockierung der Schaltwelle in ihrer jeweiligen Drehstellung zwischen Schließstellung und Öffnungsstellung angeschlossen ist und daß die Blockiervorrichtung auf die Drehstellung eines am Kugelhahngehäuse drehbar gelagerten Trägheitskörpers anspricht, dessen durch Federbeaufschlagung bewirkte Drehbewegung durch Drehung der Schaltwelle ausgelöst und durch seine Massenträgheit gehemmt wird. Wenn die Schaltwelle zu schnell betätigt wird, erreicht der Trägheitskörper, dessen durch die Federbeaufschlagung verursachte Drehbewegung durch seine Massenträgheit gehemmt wird, nicht diejenige Drehstellung, in welcher die Funktion der Blockiervorrichtung unterbunden ist. Daher erfolgt bei zu schneller Betätigung der Schaltwelle ein automatisches Ansprechen der Blockiervorrichtung, so daß die Schaltwelle nicht weitergedreht werden kann. Die Blockiervorrichtung spricht aber auch auf Drehbewegungen des kugelförmigen Absperrkörpers an, die durch das durchströmende Medium bewirkt werden. Insbesondere in der Nähe der Schließstellung besteht nämlich die Gefahr, daß der Absperrkörper durch Strömungseinflüsse plötzlich in seine Schließstellung gedreht wird, was ebenfalls zu unzulässig hohen Druckspitzen führen würde. Durch die Erfindung wird also auch eine Sicherung gegen ungewollte schlagartige Verstellung des Absperrkörpers durch Strömungseinflüsse erreicht.

Bei bevorzugten Ausführungsformen der Erfindung findet eine selbsttätige Blockierung bei zu - schneller Betätigung in beiden Betätigungsrichtungen statt. Der Trägheitskörper ist bei solchen Ausführungsformen durch eine oder mehrere Federn in einer Mittenstellung gehalten und wird bei von dieser Mittenstellung abweichender Drehstellung durch diese Federn in die Richtung dieser Mittenstellung beaufschlagt.

Bei einer besonders einfachen und dennoch zuverlässig arbeitenden Ausführungsform der Erfindung besteht die Blockiervorrichtung aus zwei konzentrischen, im radialen Abstand einander gegenüberliegenden ringförmigen Formschlußstrukturen, von denen die eine an den Trägheitskörper angeschlossen und die andere gehäusefest ist, und aus wenigstens einem Wälzkörper, der zwischen den beiden ringförmigen Formschlußstrukturen angeordnet und über einen Mitnehmer an die Schaltwelle angekoppelt ist. Die Formschlußstrukturen weisen jeweils paarweise einander gegenüberliegende und in Umfangsrichtung aufeinanderfolgende, durch Stege voneinander abgegrenzte Mulden auf, deren Form auf die Oberfläche des Wälzkörpers abgestimmt ist. Die lichte Weite zwischen zwei einander gegenüberliegenden Stegen der beiden Formschlußstrukturen ist kleiner als der Durchmesser des Wälzkörpers. Die lichte Weite zwischen dem Boden einer Mulde der einen Formschlußstruktur und einem ihm gegenüberliegenden Steg der anderen Formschlußstruktur ist gleich dem Durchmesser des Wälzkörpers oder etwas größer als dieser. Ferner ist der Trägheitskörper mit der an ihn angeschlossenen Formschlußstruktur um einen begrenzten Drehwinkel von einer Ruhelage ausgehend drehbar. Die Größe dieses begrenzten Drehwinkels entspricht annähernd dem Teilungsabstand der Mulden der Formschlußstrukturen.

Weitere Merkmale und Vorteile der Erfindung ergeben sich aus der folgenden Beschreibung von Ausführungsbeispielen und aus der Zeichnung, auf die Bezug genommen wird. In der Zeichnung zeigen:

Fig. 1 einen Schnitt eines Kugelhahns durch die Achse seiner Schaltwelle entlang der Linie I-I in Fig. 2;

Fig. 2 eine Schnittansicht des Kugelhahns längs Linie II-II in Fig. 1; und

Fig. 3a bis 3g vergrößerte Teilansichten einer Blockiervorrichtung des in den Fig. 1 und 2 gezeigten Kugelhahns, jeweils in verschiedenen Betätigungszuständen.

In dem Gehäuse 10 des Kugelhahns ist ein kugelförmiger Absperrkörper 12 drehbar gelagert. An den Absperrkörper 12 ist eine im Gehäuse 10 drehbar gelagerte Schaltwelle 14 angeschlossen. Die Schaltwelle 14 wird über einen an ihr mittels einer Schraube 16 befestigten Hebel 18 betätigt. Die Achse der Schaltwelle ist mit 20 bezeichnet. Da das Gehäuse 10 und der Absperrkörper 12 keine Besonderheiten gegenüber herkömmlichen Kugelhähnen aufweisen, werden sie hier nicht näher beschrieben.

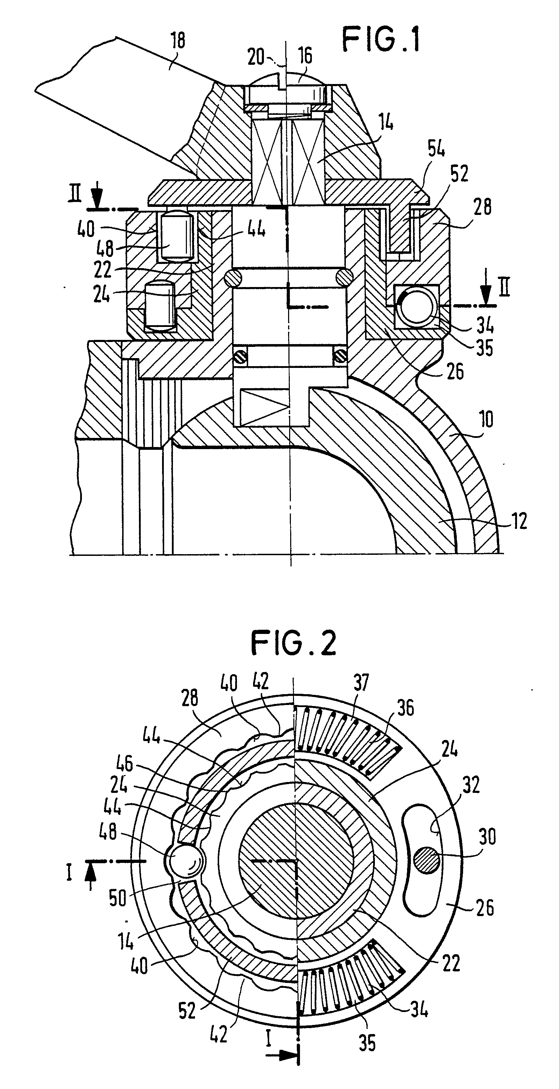

Die Schaltwelle 14 ist in einem zylindrischen Fortsatz 22 des Gehäuses 10 gelagert. Diesen Gehäusefortsatz 22 umgibt eine gehäusefeste Hülse 24, die an ihrem dem Gehäuse 10 zugewandten Ende in einen Flansch 26 übergeht und mit dem Gehäuse 10 fest verbunden ist. Die Hülse 24 ist ihrerseits von einem ringförmigen Trägheitskörper 28 umgeben, der um die Hülse 24 herum drehbar ist. Die Drehbeweglichkeit des Trägheitskörpers 28 wird jedoch, wie in Fig. 2 gezeigt, durch einen Anschlagstift 30 begrenzt, der in eine Bohrung des Trägheitskörpers 28 eingesetzt ist und in ein Langloch 32 des gehäusefesten Flansches 26 eingreift. Wie weiterhin aus Fig. 2 ersichtlich ist, wird der Trägheitskörper 28 durch zwei zylindrische Druckfedern 34, 36 in einer Mittenstellung gehalten, in welcher sich der Anschlagstift 30 in der Mitte des Langlochs 32 des Flansches 26 befindet. Die Druckfedern 34, 36 sind jeweils in einer bogenförmigen Aussparung 35, 37 aufgenommen, von denen die eine Hälfte in dem gehäusefesten Flansch 26 und die andere Hälfte im Trägheitskörper 28 gebildet ist. Ferner stützen sich die Druckfedern 34, 36 an ihren Enden jeweils an einer radial verlaufenden, je zur Hälfte in dem Trägheitskörper 28 und in dem gehäusefesten Flansch 26 gebildeten Endwandung der zugehörigen bogenförmigen Aussparung 35, 37 ab.

Der ringförmige Trägheitskörper 28 ist auf seiner Innenseite mit einer Formschlußstruktur versehen, die aus einer sich über den gesamten Umfang erstreckenden Folge von Mulden 40 besteht, die jeweils durch zahnartige Stege 42 voneinander abgegrenzt sind. Konzentrisch mit der durch die Mulden 40 und Stege 42 gebildeten Formschlußstruktur und von dieser mit radialem Abstand umgeben ist eine weitere Formschlußstruktur, die an der Außenseite der Hülse 24 gebildet ist und ebenfalls aus einer sich über den gesamten Umfang erstreckenden Folge von Mulden 44, die durch zahnartige Stege 46 voneinander abgegrenzt sind, gebildet ist. Die Mulden 40, 44 und Stege 42, 46 liegen einander jeweils paarweise gegenüber, wenn sich der Trägheitskörper 28 in seiner in Fig. 2 gezeigten Mittenstellung befindet. Die Teilungen der beiden Formschlußstrukturen sind also gleich. Ein zylindrischer Wälzkörper 48 ist zwischen den beiden Formschlußstrukturen angeordnet. Die Form der Mulden 40, 44 entspricht der Oberfläche des Wälzkörpers 48. Der Wälzkörper 48 ist mit geringem Spiel in einer Aussparung 50 eines ringförmigen Mitnehmers 52 gehalten, welcher koaxial mit der Schaltwelle 14 und über einen Flansch 54 drehfest mit dieser verbunden ist.

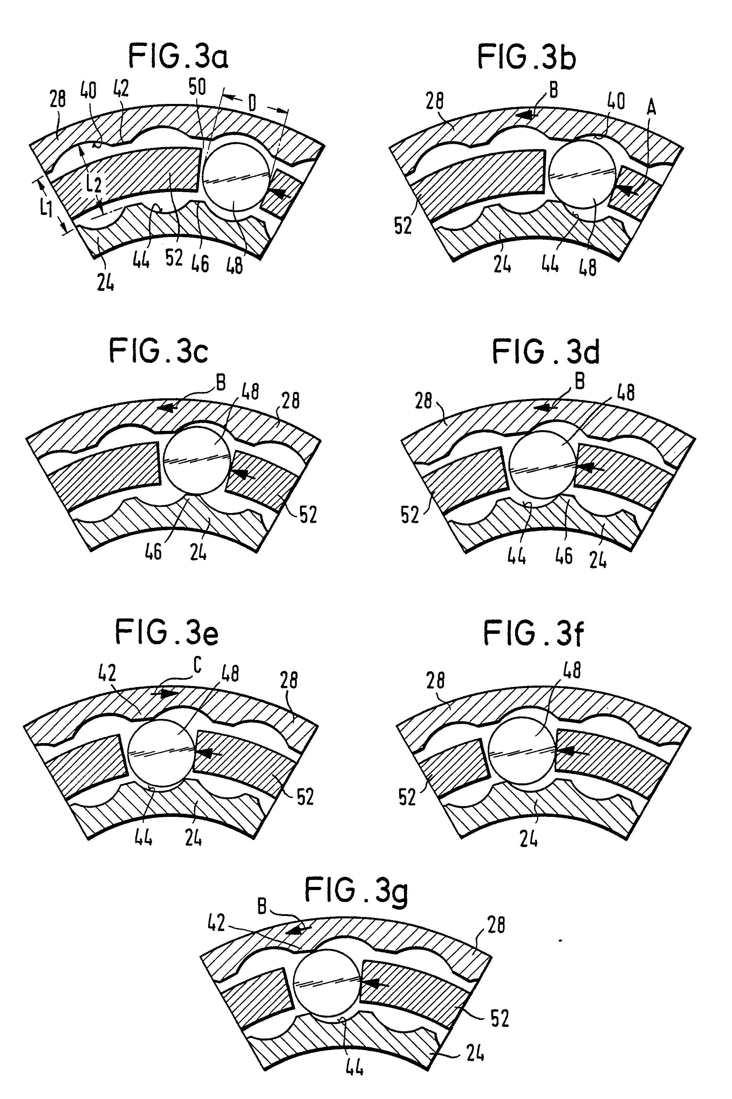

Für die Funktionsweise, die nun unter Bezugnahme auf die Fig. 3a bis 3g erläutert wird, ist von Bedeutung, daß der Trägheitskörper 28 durch die Bemessung des Langlochs 32 nur eine Drehbewegung von seiner Mittenlage ausgehend ausführen kann, die etwa so groß ist wie der Teilungsabstand zweier benachbarter Mulden 40 bzw. 44. Weiterhin ist von Bedeutung, daß zum einen die lichte Weite $L_1$ (Fig. 3a) zwischen zwei einander gegenüberliegenden Stegen 42, 46 der beiden Formschlußstrukturen kleiner als der Durchmesser D des Wälzkörpers 48 ist und zum anderen die lichte Weite $L_2$ zwischen dem Boden einer Mulde der einen Formschlußstruktur und einem ihm gegenüberliegenden Steg der anderen Formschlußstruktur gleich dem Durchmesser D des Wälzkörpers 48 oder etwas größer als dieser Durchmesser ist.

In der Schließstellung und Öffnungsstellung des Kugelhahns wird der Trägheitskörper 28 durch die Druckfedern 34, 36 in seiner in Fig. 2 gezeigten Mittenstellung gehalten, wobei die Mulden 40, 44 einander paarweise gegenüberliegen. Der Wälzkörper 48 befindet sich einerseits lose zwischen zwei der einander gegenüberliegenden Mulden 40, 44 und andererseits mit geringem Spiel in der Aussparung 50 des ringförmigen Mitnehmers 52. Wird nun, wie in Fig. 3b gezeigt, der Wälzkörper 48 durch den Mitnehmer 52 in Richtung des Pfeiles A mitbe wegt, wobei der Wälzkörper 48 seinerseits gegen eine Seitenwand einer Mulde 40 drückt, so wird der ringförmige Trägheitskörper 28 in Richtung des Pfeiles B mitgenommen. Bei der anschließenden Weiterdrehung des Mitnehmers 52 wird der Wälzkörper 48 an der Seitenwand einer Mulde 44 entlang hochgedrückt, bis er, wie in Fig. 3c gezeigt, auf dem Scheitel eines Steges 46 angelangt ist. Gleichzeitig wird der ringförmige Trägheitskörper 28 durch den Wälzkörper 48 mitgenommen. Bei fortgesetzter Drehbewegung des Mitnehmers 52 rollt schließlich der Wälzkörper 48 von dem Scheitel des Steges 46 ab und gelangt in die darauffolgende Mulde 44 des gehäusefesten Ringes 24. Sobald der Wälzkörper 48 am Boden dieser Mulde 44 angekommen ist, gibt er den ihm gegenüberliegenden zahnförmigen Steg 42 des Trägheitskörpers 28 frei. Dieser Zustand ist in Fig. 3e gezeigt. Der Trägheitskörper kann sich nun in Richtung des Pfeiles C (Fig. 3e) unter der Wirkung der beiden Druckfedern 34, 36 auf seine Mittenstellung zubewegen. Diese Drehbewegung des Trägheitskörpers 28 wird jedoch durch seine träge Masse gehemmt. Wird die Schaltwelle 14 ausreichend langsam betätigt, so kann sich der ringförmige Trägheitskörper 28 bis in seine Mittenstellung (Fig. 2) zurückdrehen. Es tritt dann der in Fig. 3f gezeigte Zustand ein. Wird hingegen die Schaltwelle 14 mit zu großer Geschwindigkeit betätigt, so bleibt dem Trägheitskörper 28 nicht die erforderliche Zeit, um durch die Druckfedern 34, 36 in seine Mittenstellung zurückgedreht zu werden. Vielmehr wird der Wälzkörper 48 durch den Mitnehmer 52 aus der Mulde 44 heraus und gegen den nächsten Steg 42 gedrückt und ist daher bestrebt, den ringförmigen Trägheitskörper 28 weiterhin in Richtung des Pfeiles B mitzunehmen. Der Trägheitskörper 28 hat sich nunmehr jedoch so weit gedreht, daß für den Anschlagstift 30 das Ende des Langloches 32 erreicht ist und der Trägheitskörper folglich nicht weitergedreht werden kann. In diesem in Fig. 3g gezeigten Zustand ist daher die Schaltwelle 14 gegen weitere Drehung blockiert. Ein Weiterdrehen der Schaltwelle 14 ist erst möglich, nachdem eine geringfügige Rückdrehung zur Freigabe des Trägheitskörpers 28 erfolgt ist, so daß dieser durch die Federn 34, 36 in seine Mittenlage zurückgedreht werden kann. Solange die Schaltwelle 14 ausreichend langsam betätigt wird, ist die Blockiervorrichtung außer Funktion und die Betätigung zwischen Schließstellung und Öffnungsstellung in keiner Weise gehemmt.

In der Zeichnung ist jeweils nur ein Wälzkörper 48 gezeigt. Es können jedoch zwei, drei oder auch mehr derartige Wälzkörper verwendet werden.

Bei einer weiteren, nicht gezeigten Ausführungsform bildet die ringförmige Trägheitsmasse einen von einem gehäusefesten Ringteil umgebenen Innenring. Diese Ausführungsform ist vorteilhaft, wenn der drehbare Trägheitskörper geschützt untergebracht werden soll.

Die maximal mögliche Schaltgeschwindigkeit ohne Blockierung wird durch die träge Masse des Trägheitskörpers 28 einerseits und die Bemessung der Federn 34, 36 andererseits bestimmt. Trotz der kompakten Bauform der Blockiervorrichtung kann leicht eine Begrenzung der maximal möglichen Schaltgeschwindigkeit auf Werte erreicht werden, bei denen unzulässig hohe Druckspitzen mit Sicherheit vermieden werden. Die Mindestzeitspanne für eine Betätigung zwischen Öffnungsstellung und Schließstellung, also eine Drehbewegung über einen Drehwinkel von 90°, kann beispielsweise einige Sekunden betragen. Bei größeren Nennweiten wird diese Mindestzeitspanne länger bemessen als bei kleineren Nennweiten.

Bei einer weiteren, nicht dargestellten Ausführungsform entfallen der Anschlagstift 30 und das Langloch 32. Die Drehbewegung des ringförmigen Trägheitskörpers 28 wird allein dadurch begrenzt, daß die zylindrischen Druckfedern 34, 36 ihre Blocklänge erreichen und dann nicht weiter zusammengedrückt werden können.

## Ansprüche

1. Kugelhahn mit einem kugelförmigen Absperrkörper, der über eine im Kugelhahngehäuse drehbar gelagerte Schaltwelle zwischen Schließstellung und Öffnungsstellung verstellbar ist, dadurch gekennzeichnet, daß die Schaltwelle (14) an eine Blockiervorrichtung zur Blokkierung der Schaltwelle (14) in ihrer jeweiligen Drehstellung zwischen Schließstellung und Öffnungsstellung angeschlossen ist und daß die Blockiervorrichtung auf die Drehstellung eines am Kugelhahngehäuse (10) drehbar gelagerten Trägheitskörpers (28) anspricht, dessen durch Federbeaufschlagung bewirkte Drehbewegung durch Drehung der Schaltwelle (14) ausgelöst und durch seine Massenträgheit gehemmt wird.

2. Kugelhahn nach Anspruch 1, dadurch gekennzeichnet, daß der Trägheitskörper (28) durch wenigstens eine Feder (34, 36) in einer Mittenstellung gehalten und bei von dieser Mittenstellung abweichender Drehstellung durch die Feder (34, 36) in die Richtung dieser Mittenstellung beaufschlagt wird.

3. Kugelhahn nach Anspruch 2, dadurch gekennzeichnet, daß der Trägheitskörper (28) über einen begrenzten Drehwinkel drehbar ist.

4. Kugelhahn nach einem der vorstehenden Ansprüche, dadurch gekennzeichnet, daß die Blockiervorrichtung durch zwei konzentrische, im radialen Abstand einander gegenüberliegende ringförmige Formschlußstrukturen, von denen die eine an den Trägheitskörper (28) angeschlossen und die andere gehäusefest ist, und durch wenigstens einen Wälzkörper (48) gebildet ist, der zwischen den beiden ringförmigen Formschlußstrukturen angeordnet und über einen Mitnehmer (52) an die Schaltwelle (14) angekoppelt ist, daß die Formschlußstrukturen jeweils paarweise einander gegenüberliegende und in Umfangsrichtung aufeinanderfolgende sowie durch Stege (42, 46) voneinander abgegrenzte Mulden (40, 44) aufweisen, deren Form auf die Oberfläche des Wälzkörpers (48) abgestimmt ist, daß die lichte Weite ($L_1$) zwischen zwei einander gegenüberliegenden Stegen (42, 46) der beiden Formschlußstrukturen kleiner als der Durchmesser (D) des Wälzkörpers (48) ist und die lichte Weite ($L_2$) zwischen dem Boden einer Mulde der einen Formschlußstruktur und einem ihm gegenüberliegenden Steg der anderen Formschlußstruktur gleich dem Durchmesser (D) des Wälzkörpers (48) oder etwas größer als dieser ist und daß der Trägheitskörper (48) mit der an ihn angeschlossenen Formschlußstruktur um einen begrenzten Drehwinkel von einer Ruhelage ausgehend drehbar ist, der dem Teilungsabstand der Mulden (40, 44) der Formschlußstrukturen entspricht.

5. Kugelhahn nach Anspruch 4, dadurch gekennzeichnet, daß der Trägheitskörper (48) ringförmig ausgebildet ist.

6. Kugelhahn nach Anspruch 5, dadurch gekennzeichnet, daß der ringförmige Trägheitskörper (48) auf seiner Innenseite mit einer der beiden Formschlußstrukturen versehen ist und die gehäusefeste Formschlußstruktur umgibt.

7. Kugelhahn nach einem der Ansprüche 3 bis 6, dadurch gekennzeichnet, daß die Drehbewegung des Trägheitskörpers (48) durch gehäusefeste Anschlagmittel (30) begrenzt ist.

8. Kugelhahn nach einem der Ansprüche 3 bis 6, dadurch gekennzeichnet, daß die Drehbewegung des Trägheitskörpers (48) durch den Federweg der für die Federbeaufschlagung vorgesehenen Federn (34, 36) begrenzt ist.

0 266 594

FIG.1

FIG.2

# FIG.3a

# FIG.3b

# FIG.3c

# FIG.3d

# FIG.3e

# FIG.3f

# FIG.3g

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 535 436 (LONCA) <br> * Insgesamt * <br> --- | 1 | F 16 K 5/06 <br> F 16 K 47/02 |
| A | PATENT ABSTRACTS OF JAPAN, Band 10, Nr. 10 (M-446)[2067], 16. Januar 1986; & JP-A-60 172 782 (MAEZAWA KIYUUSOU KOGYO K.K.) 06-09-1985 <br> --- | | |
| A | PATENT ABSTRACTS OF JAPAN, Band 9, Nr. 206 (M-406)[1929], 23. August 1985; & JP-A-60 65 979 (NITSUPOU VALVE KOGYO K.K.) 15-04-1985 <br> --- | | |
| A | US-A-3 403 887 (MYERS) <br> ----- | | |

RECHERCHIERTE SACHGEBIETE (Int. Cl.4)

F 16 K
G 05 G

Der vorliegende Recherchenbericht wurde für alle Patentansprüche erstellt

| Recherchenort | Abschlußdatum der Recherche | Prüfer |
|---|---|---|
| DEN HAAG | 09-02-1988 | VERELST P.E.J. |